# EUROPÄISCHE PATENTSCHRIFT

(11) **EP 1 426 248 B1**
(45) Veröffentlichungstag und Bekanntmachung des Hinweises auf die Patenterteilung: **19.07.2006**
(21) Anmeldenummer: 03026846.0
(22) Anmeldetag: 21.11.2003
(51) Int. Cl.: B60R 21/20

(54) **Gassackmodul**
Airbag module
Module de coussin gonflable

(30) Priorität: 04.12.2002 DE 20218740 U
(43) Veröffentlichungstag der Anmeldung: 09.06.2004
(73) Patentinhaber: TRW Automotive Safety Systems GmbH, 63743 Aschaffenburg (DE)
(72) Erfinder: Schütz, Dominik, 63857 Waldaschaff (DE); Scherer, Ralf, 63739 Aschaffenburg (DE); Schneider, Michael, Dr., 63834 Sulzbach (DE)
(74) Vertreter: Kitzhofer, Thomas

(56) Entgegenhaltungen:
- DE-A- 4 205 726
- US-A- 5 577 768
- US-A- 6 092 832
- US-A1- 2001 035 631
- ANONYMOUS: "Snap-in air bag module" RESEARCH DISCLOSURE, KENNETH MASON PUBLICATIONS, HAMPSHIRE, GB, Bd. 432, Nr. 30, April 2000 (2000-04), XP007125885 ISSN: 0374-4353

## Beschreibung

Die Erfindung betrifft ein Gassackmodul, nach dem Oberbegriff des Anspruchs 1.

Die Befestigung eines Gassackmoduls am Fahrzeug, sei es am Lenkrad, am Armaturenbrett oder auch an einem Fahrzeugsitz, muss über die gesamte Lebensdauer des Moduls stabil bleiben, der Belastung beim Entfalten des Gassacks standhalten sowie leichtgewichtig und möglichst wenig voluminös sein.

Laut dem Research Disclosure XP 007125885 kann ein Gassackmodul mittels einer Rastverbindung an einem Lenkrad befestigt werden.

Zur Befestigung eines Gassackmoduls an einem Lenkrad setzt die gattungsgemäße US 6 092 832 A ein aus einem Blech ausgestanztes flaches Trägerteil ein, von dem Rasthaken zur lenkradseitigen Befestigung abstehen. Gassack, Gasgenerator und Abdeckkappe sind am Trägerteil befestigt, während die Rasthaken einstückig mit dem Trägerteil ausgebildet sind.

In der US 5 577 768 wird die Abdeckkappe an Rasthaken befestigt, die einstückig an einem Blech-Trägerteil ausgebildet sind und seitlich von diesem abstehen.

Bei der DE 42 05 726 A erfolgt die Befestigung des Gassackmoduls am Lenkrad über einen separaten Haltering mit daran ausgebildeten Haken, der außerdem das Modulgehäuse, den Gassack, den Gasgenerator und die Abdeckkappe aneinander befestigt.

Die US 2001 0035631 A nutzt einen abstehenden Abschnitt eines Trägerteils des Gassackmoduls als Hupenkontakt.

Die Erfindung schafft ein Gassackmodul mit einer derartigen Befestigung.

Dies wird bei einem oben genannten Gassackmodul durch die Merkmale des Auspruchs 1 erreicht. Hierbei bestehen sowohl der Basisabschnitt als auch die Rasthaken nur aus Blech. Der Herstellungsaufwand ist gering, und eine derartige Befestigungsvorrichtung weist bei der geforderten Stabilität nur ein geringes Gewicht auf. Durch das einstückige Verbinden mehrerer Rasthaken mit einem Basisabschnitt wird zum einen die Stabilität der Befestigung erhöht und zum anderen eine kurze Montagezeit bei der Befestigung der Rasthaken am Gassackmodul erreicht.

Bevorzugt sind die Rasthaken aus flachen Blechstreifen gebildet. In einer bevorzugten Ausführungsform der Erfindung bildet das Basisteil einen starren Rahmen.

Das Trägerblech ist bevorzugt ein Stanzteil, es kann aber auch auf andere Weise aus einem größeren Blech ausgeschnitten sein. Bei der Herstellung erstrecken sich die Rasthaken in der gleichen Ebene wie der Basisabschnitt. Um die Funktion zur Befestigung des Gassackmoduls am Fahrzeug übernehmen zu können, werden die Rasthaken vom Trägerblech im rechten Winkel abgebogen. Abhängig von der Belastungsrichtung ist auch ein anderer Winkel denkbar.

Das Trägerblech ist einstückig mit einem Gasgenerator ausgebildet.

Das Trägerblech kann eine Verstärkungsfunktion für das Modulgehäuse oder das Gasgeneratorhalteelement übernehmen, was besonders vorteilhaft ist, wenn diese Bauteile aus Kunststoff bestehen.

Als Zusatzfunktion kann das Trägerblech auch einen Hupenkontakt bilden, so dass, gerade bei der Verwendung eines Kunststoffmodulgehäuses, kein zusätzliches Bauteil eingesetzt werden muss.

In einer weiteren bevorzugen Ausführungsform der Erfindung ist vorgesehen, dass das Gassackmodul in eine Abdeckkappe integriert ist.

In diesem Fall kann die Abdeckkappe von einer Stirnseite abstehende Seitenwände aufweisen, an denen schwenkbar angeordnete Klappen vorgesehen sind, wobei das Trägerblech mit den Klappen verbunden ist. Über die Klappen ist eine sichere Befestigung der Abdeckkappe am Trägerblech und damit am Fahrzeug gewährleistet.

Weitere Merkmale und Vorteile der Erfindung ergeben sich aus der nachfolgenden Beschreibung mehrerer Ausführungsbeispiele in Verbindung mit den beigefügten Zeichnungen. In diesen zeigen:
- Figur 1 eine schematische Teilschnittansicht eines Gassackmoduls gemäß einer ersten Variante;
- Figur 2 eine schematische Teilschnittansicht eines Gassackmoduls gemäß einer zweiten Variante;
- Figur 3 eine perspektivische Ansicht eines Trägerblechs für ein erfindungsgemäßes Gassackmodul;
- Figuren 4 bis 6 verschiedene Ausführungsformen von Trägerblechen für ein Gassackmodul vor dem Abbiegen der Rasthaken;
- Figur 7 eine perspektivische Ansicht eines Trägerblechs für ein Gassackmodul;
- Figuren 8 bis 10 verschiedene Ausführungsformen von Trägerblechen, teils für ein erfindungsgemäßes Gassackmodul vor dem Abbiegen der Rasthaken;
- Figur 11 eine Abdeckkappe eines Gassackmoduls gemäß einer Variante mit geöffneten Klappen;
- Figur 12 die Abdeckkappe aus Figur 11 mit geschlossenen Klappen;
- Figur 13 ein Gassackmodul; und
- Figur 14 einen Gasgenerator mit einem Trägerblech für ein erfindungsgemäßes Gassackmodul.

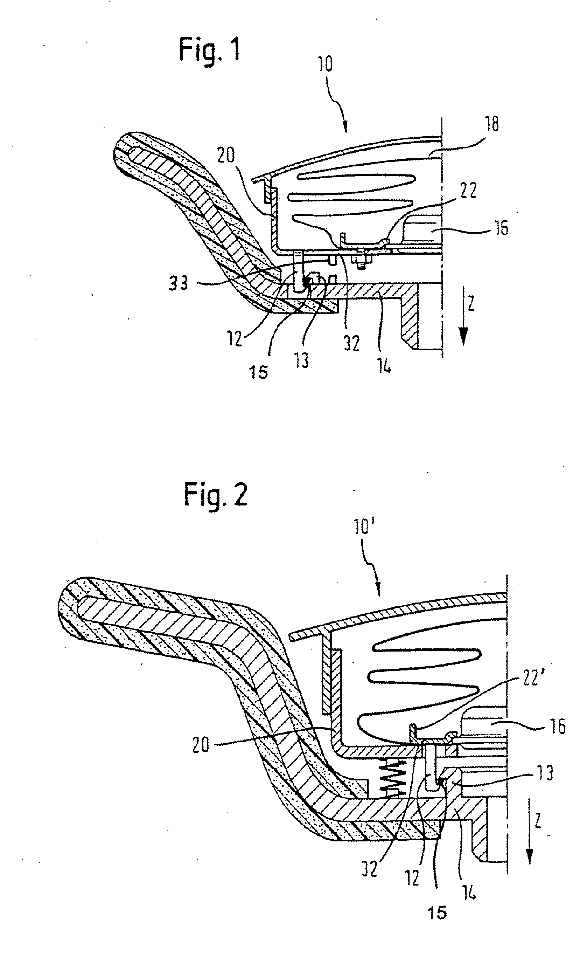

Figur 1 zeigt ein dem Prinzip nach bekanntes Gassackmodul 10, welches hier zur Verdentlichung der Erfindung beschrieben ist und das mittels mehrerer Rasthaken 12 an einem fahrzeugfesten Teil 14, im hier gezeigten Fall einem Lenkrad, befestigt ist. Hierzu greifen die Rasthaken 12 in ein an fahrzeugfesten Haken 13 gehaltertes elastisches, horizontal zum Einrasten verschieblichesRastelement 15 ein. Das Gassackmodul 10 enthält einen Gasgenerator 16 sowie einen gefalteten Gassack 18. Der Gasgenerator 16 und der Gassack 18 sind auf bekannte Weise in einem Modulgehäuse 20 aufgenommen, das in den hier gezeigten Ausführungsformen auch gleichzeitig als Gasgeneratorhalteelement dient. Als Gasgeneratorhalteelement kann aber auch ein eigenes Bauteil vorgesehen sein. Der Gassack 18 ist mittels eines Gassackhalteelements 22 am Modulgehäuse 20 befestigt. Die Rasthaken 12 sind so ausgebildet, dass eine Verschiebung des Gassackmoduls in Axialrichtung Z, z.B. zur Betätigung einer Hupe, möglich ist.

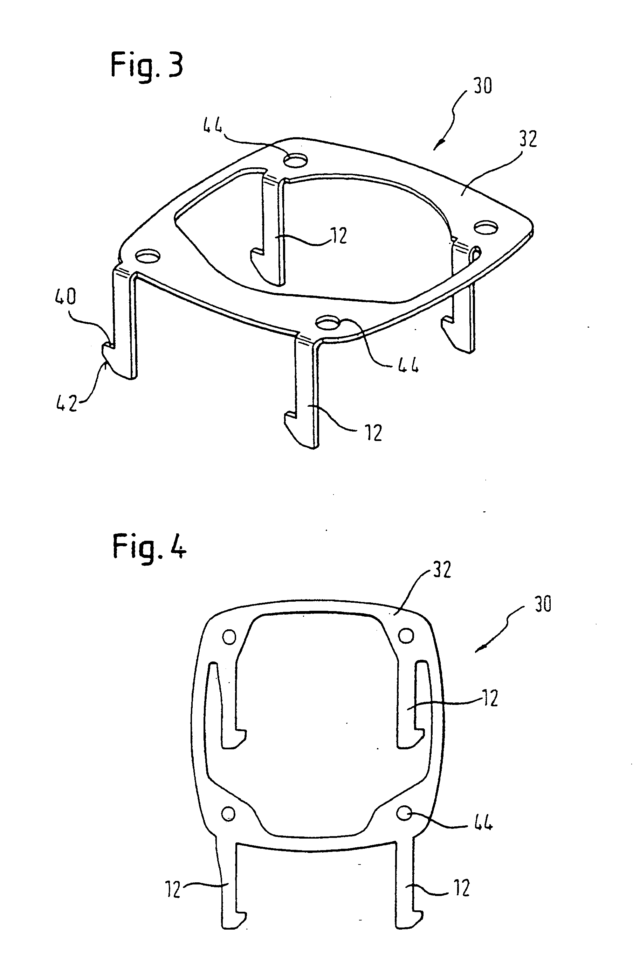

Die Rasthaken 12 sind Bestandteil eines Trägerblechs 30, das in verschiedenen Ausführungsformen in den Figuren 3 bis 10 gezeigt ist. Das Trägerblech 30 hat einen im wesentlichen flachen, starren, rahmenförmigen Basisabschnitt 32, von dem die Rasthaken 12 abstehen. Die Rasthaken 12 sind einstückig mit dem Basisabschnitt 32 verbunden.

Das Trägerblech 30 ist als Stanzteil aus einem Blech, bevorzugt einem Stahlblech, gefertigt. Es sind natürlich auch andere Methoden zum Ausschneiden des Trägerblechs aus einem Blech einsetzbar.

Direkt nach dem Zuschnitt liegen die Rasthaken 12 in der gleichen Ebene wie der Basisabschnitt 32, wie dies in den Figuren 4, 5, 6 sowie 8 bis 10 zu sehen ist.

Jeder der Rasthaken 12 weist an seinem freien Ende eine Anlagefläche 40 zum Eingriff in das Rastelement 15 sowie eine abgeschrägte Gleitfläche 42 auf, wobei die Gleitfläche 42 das Einschieben des Moduls 10 z.B. in das Lenkrad ermöglicht.

Die Rasthaken 12 werden vor dem Einbau in das Gassackmodul 10 im rechten Winkel vom Basisabschnitt 32 abgebogen. Eine weitere Umformung der Rasthaken 12 kann unterbleiben.

Das Trägerblech 30 kann auch statt in Rahmenform in Form einer durchgehenden Platte oder in einer anderen geeigneten Form ausgebildet sein.

In der in Figur 1 gezeigten Ausführungsform des Gassackmoduls 10 ist das Trägerblech 30 Bestandteil des Modulgehäuses 20. Der Basisabschnitt 32 ist hierbei durch einen Abschnitt des Modulbodens gebildet.

In der in Figur 2 gezeigten Variante des Gassackmoduls 10' ist das Trägerblech 30 einstückig mit dem Gassackhalteelement 22' ausgebildet. Der Basisabschnitt 32 wird dabei von einem Teil des ringförmigen Gassackhalteelements 22' gebildet. Der Basisabschnitt 32 weist mehrere Befestigungslöcher 44 auf, die unter anderem der Verschraubung des Gassackhalteelements 22' am Modulgehäuse 20 dienen.

Bei der Verwendung eines ringförmigen bzw. rahmenförmigen Basisabschnitts 32, kann das Material des Rahmeninneren, das ansonsten als Verschnitt abfallen würde, zur Ausbildung einiger oder aller Rasthaken 12 verwenden werden.

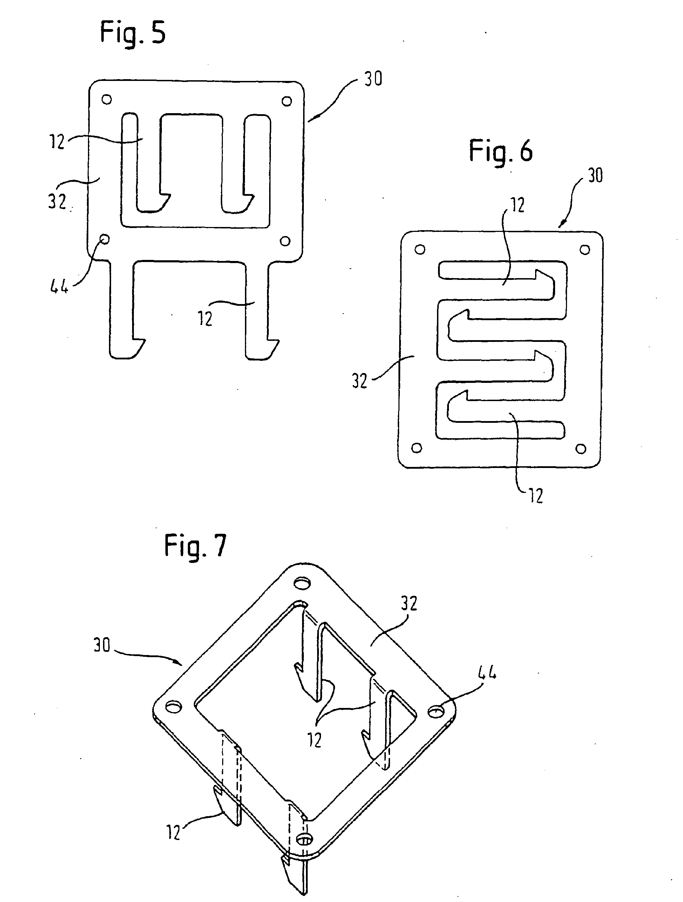

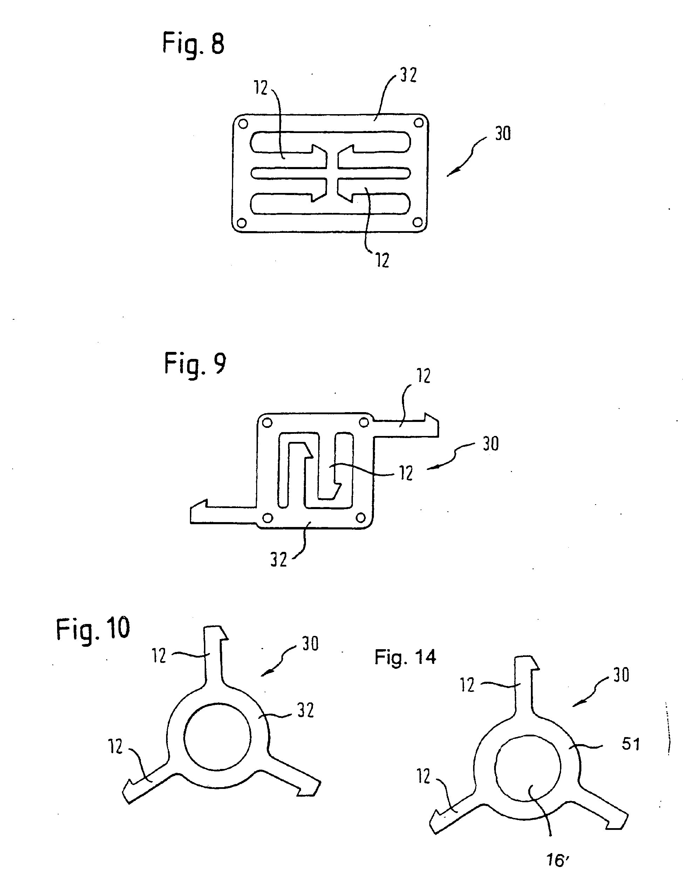

Abhängig von den Dimensionen der Trägerblechs 30 können z.B. nur zwei (siehe Figuren 4, 5 und 9) oder alle vier Rasthaken 12 (siehe Figuren 6 und 8) im Rahmeninneren angeordnet sein. Nach dem Ausschneiden oder Ausstanzen des Trägerblechs 30 aus einem größeren Blech werden alle Rasthaken 12 aus der Ebene des Basisabschnitts 32 herausgebogen.

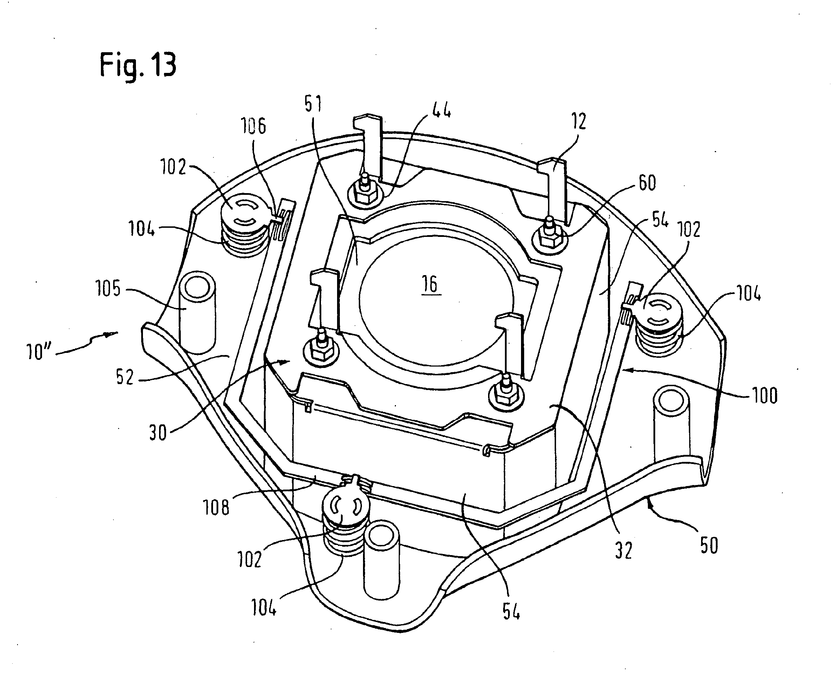

In einer anderen Variante ist das Trägerblech 30 ein vom Gassackmodul 10 separates Bauteil, das an der Modulunterseite, z.B. durch Schrauben unter Verwendung der Befestigungslöcher 44 befestigt ist (siehe Figur 13). In diesem Fall kann der Basisabschnitt 32 z.B. rahmenförmig oder ausgefüllt (nicht gezeigt) ausgebildet sein. Bei einer derartigen Ausführung dient das Trägerblech 30 gleichzeitig zur Verstärkung des Modulgehäuses 20. Gleiches gilt auch für den Fall, in dem die Aufgabe des Modulgehäuses von einem Gasgeneratorhalteelement übernommen wird.

Bei der Verwendung eines einstückig mit einem Gasgeneratorhalteelement ausgebildeten Trägerblechs 30 ergibt sich der Vorteil, dass die bei der Zündung des Gasgenerators auftretenden Kräfte direkt über die Rasthaken an ein fahrzeugfestes Bauteil abgeleitet werden können.

Bei im wesentlichen rechteckigen Gassackmodulen sind bevorzugt vier Rasthaken 12 vorgesehen. Bei der Verwendung von runden Gassackmodulen ist, wie in Figur 10 gezeigt, auch eine Verwendung einer anderen Anzahl von Rasthaken 12, z.B. drei oder fünf denkbar.

Die Rasthaken 12 können alle in eine Richtung ausgerichtet sein (siehe z.B. Figur 3), es ist aber auch möglich, wie die Figuren 8 bis 10 zeigen, eine Ausrichtung der Rasthaken 12 in unterschiedlichen Richtungen vorzusehen.

Wenn das Gassackmodul als sogenanntes Floating-Horn-Modul ausgebildet ist, können das Trägerblech 30 bzw. die Rasthaken 12 auch als Hupenkontakt 33 verwendet werden (siehe Fig. 1).

Da die Rasthaken 12 stets nur in ihrer Längsrichtung belastet werden, ist normalerweise eine weitere Verstärkung der Rasthaken 12 durch weitere Umformschritte oder das Einbringen von Sicken, nicht erforderlich. Zur Erhöhung der Stabilität des Basisabschnitts 32 können an diesem Sicken, umgebördelte Randabschnitte oder ähnliches vorgesehen sein.

In einer anderen, nicht dargestellten Variante ist im Gassackmodul ein den Gasgenerator übergreifender Käfig vorgesehen, wobei die Rasthaken an diesem Käfig angeformt sind.

Das Trägerblech 30 ist erfindungsgemäß einstückig mit einem Flansch 51 eines Gasgenerators 16' ausgebildet, wie dies Figur 14 zeigt. Anordnung und Zahl der Rasthaken 12 sind hier natürlich variierbar.

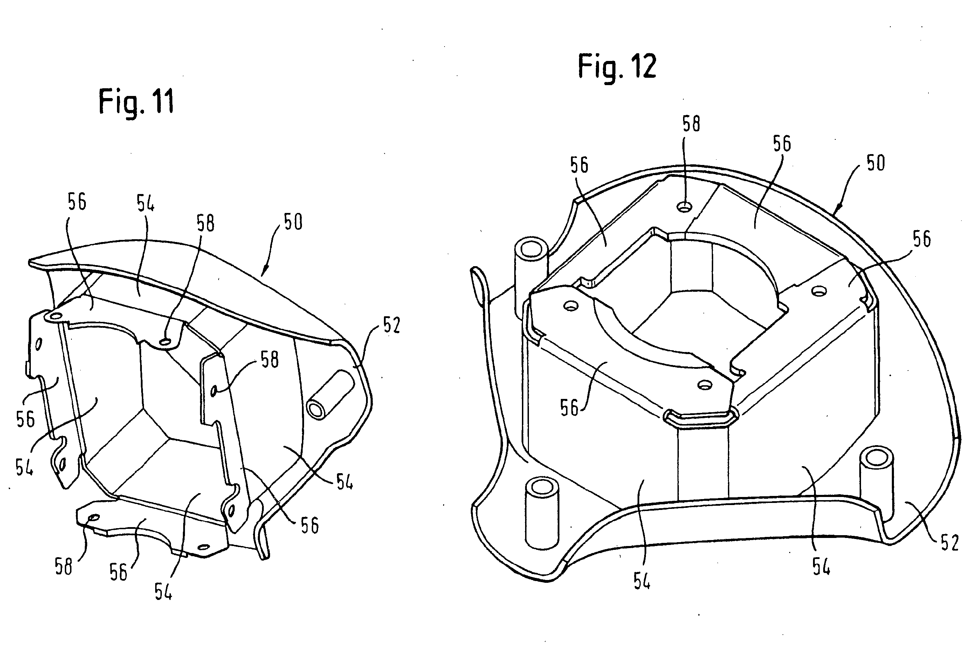

Bei der in den Figuren 11 bis 13 dargestellten Variante ist das Gassackmodul 10" in eine Abdeckkappe 50 integriert (Figur 13), die das Gassackmodul 10" in eingebautem Zustand gegenüber einem Fahrzeuginnenraum abschließt. Die Abdeckkappe 50 hat eine Stirnwand 52, die eine von außen sichtbare Oberfläche aufweist, sowie vier von der Stirnwand 52 nach innen abstehende Seitenwände 54, die eine Aufnahme für einen Gasgenerator 16 mit einem radial abstehenden Flansch 51 und einen unterhalb des Gasgenerators 16 angeordneten Gassack (der daher in Figur 13 nicht sichtbar ist) bilden. An den der Stirnwand 52 abgewandten Enden der Seitenwände 54 sind Klappen 56 ausgebildet, die jeweils über ein Filmscharnier mit den Seitenwänden 54 verbunden sind und nach innen verschwenkt werden können. Jede Klappe 56 weist zwei Befestigungsöffnungen 58 auf, die so angeordnet sind, dass im nach innen geschwenkten, geschlossenen Zustand (Figur 12) jeweils zwei Befestigungsöffnungen 58 benachbarter Klappen 56 übereinanderliegen.

Über diese Befestigungsöffnungen 58 sind mittels Schraubverbindungen 60 die verschwenkten Klappen 56 miteinander, mit dem Flansch 51 des Gasgenerators 16, dem Gassack sowie einem separaten Trägerblech 30 verbunden. Der flache Basisabschnitt 32 des Trägerblechs 30 liegt auf den Klappen 56 auf, während die Rasthaken 12 senkrecht von diesem abstehen und von der Abdeckkappe 50 weg gerichtet sind. Die Rasthaken 12 ermöglichen eine Befestigung der Abdeckkappe 50 an einem Lenkrad.

Zum Zusammenbau des Gassackmoduls 10" wird zunächst auf bekannte Weise der Gasgenerator 16 in den Gassack eingebracht und auf konventionelle Weise z.B. über einen Haltering mit einem Einblasmund des Gassacks verbunden. Die Baugruppe aus gefaltetem Gassack und Gasgenerator 16 wird in die von den Seitenwänden 54 gebildete Aufnahme eingesetzt, und die Klappen 56 werden um 90° nach innen verschwenkt. Das Trägerblech 30 wird so positioniert, dass die Befestigungslöcher 44 über den Befestigungsöffnungen 58 liegen. Befestigungsmittel der Schraubverbindung 60, z.B. am Haltering angeordnete Bolzen, werden durch die Befestigungsöffnungen 58 und die Befestigungslöcher 44 gesteckt und mit Muttern verschraubt.

In der hier gezeigten Variante ist ein Hupenmechanismus 100 ebenfalls in der Abdeckkappe 50 angeordnet. Erste elektrische Kontakte 102 sind am freien Ende von Rückstellfedern 104 angebracht. Die Rückstellfedern 104 sind auf von der Stirnwand 52 abstehende Führungen 105 aufgesteckt.

Jeder der Kontakte 102 ist über einen federnden Kontaktarm 106 mit einem langgestreckten, u-förmig gebogenen zweiten Kontaktelement 108 verbunden, wobei ein elektrischer Kontakt aber erst hergestellt wird, wenn die Abdeckkappe 50 in das Lenkrad hinein gedrückt wird.

Eine Relativbewegung zwischen den ersten Kontakten 102 und dem zweiten Kontaktelement 108 wird z.B. ermöglicht, indem sich die Rückstellfedern 104 an einem lenkradfesten Bauteil abstützen (nicht gezeigt).

## Patentansprüche

1. Gassackmodul,
mit einem Gasgenerator,
wobei das Gassackmodul (10; 10'; 10") über mehrere Rasthaken (12) verfügt, mit denen es an einem fahrzeugfesten Bauteil (14) befestigbar ist,
wobei das Gassackmodul (10; 10'; 10") ein Trägerblech (30) mit einem im wesentlichen flachen Basisabschnitt (32) aufweist, wobei die Rasthaken (12) einstückig mit dem Basisabschnitt (32) verbunden sind und von diesem abstehen,
**dadurch gekennzeichnet, daß** das Trägerblech (30) einstückig mit dem Gasgenerator (16) ausgebildet ist.

2. Gassackmodul nach Anspruch 1, **dadurch gekennzeichnet, dass** die Rasthaken (12) flache Blechstreifen sind.

3. Gassackmodul nach einem der vorhergehenden Ansprüche, **dadurch gekennzeichnet, dass** die Rasthaken (12) im rechten Winkel vom Basisabschnitt (32) abgebogen sind.

4. Gassackmodul nach einem der vorhergehenden Ansprüche, **dadurch gekennzeichnet, dass** der Basisabschnitt (32) einen starren Rahmen bildet.

5. Gassackmodul nach einem der vorhergehenden Ansprüche, **dadurch** gekennzeichet, dass das Trägerblech (30) ein Stanzteil ist.

6. Gassackmodul nach einem der vorhergehenden Ansprüche, **dadurch gekennzeichnet, dass** das Trägerblech (30) einen Hupenkontakt (33) bildet.

7. Gassackmodul nach einem der vorhergehenden Ansprüche, **dadurch gekennzeichnet, dass** das Gassackmodul (10") in eine Abdeckkappe (50) integriert ist.

8. Gassackmodul nach Anspruch 7, **dadurch gekennzeichnet, dass** die Abdeckkappe (50) von einer Stirnseite (52) abstehende Seitenwände (54) aufweist, an denen schwenkbar angeordnete Klappen (56) vorgesehen sind und das Trägerblech (30) mit den Klappen (56) verbunden ist.

## Claims

1. A gas bag module
comprising a gas generator,
the gas bag module (10; 10'; 10") having several detent hooks (12) by which it can be fastened to a component (14) which is fixed to a vehicle,
the gas bag module (10; 10'; 10") having a sheet metal carrier plate (30) with a substantially flat base section (32), the detent hooks (12) being connected in one piece with the base section (32) and projecting therefrom,
**characterized in that** the sheet metal carrier plate (30) is formed in one piece with the gas generator (16).

2. The gas bag module according to claim 1, **characterized in that** the detent hooks (12) are flat sheet metal strips.

3. The gas bag module according to either of the preceding claims, **characterized in that** the detent hooks (12) are bent at right-angles from the base section (32).

4. The gas bag module according to any of the preceding claims, **characterized in that** the base section (32) forms a rigid frame.

5. The gas bag module according to any of the preceding claims, **characterized in that** the sheet metal carrier plate (30) is a punched part.

6. The gas bag module according to any of the preceding claims, **characterized in that** the sheet metal carrier plate (30) forms a horn contact (33).

7. The gas bag module according to any of the preceding claims, **characterized in that** the gas bag module (10") is integrated into a cover cap (50).

8. The gas bag module according to claim 7, **characterized in that** the cover cap (50) has side walls (54) projecting from a front face (52), the side walls (54) being provided with pivotally arranged flaps (56), and the sheet metal carrier plate (30) is connected with the flaps (56).

## Revendications

1. Module de coussin à gaz
comportant un générateur de gaz,
le module de coussin à gaz (10 ; 10' ; 10") disposant de plusieurs crochets d'enclenchement (12) par lesquels il peut être fixé sur un composant (14) solidaire d'un véhicule,
le module de coussin à gaz (10 ; 10' ; 10") présentant une tôle support (30) avec un tronçon de base (32) sensiblement plat, les crochets d'enclenchement (12) étant reliés d'un seul tenant avec le tronçon de base (32) et faisant saillie depuis celui-ci,
**caractérisé en ce que** la tôle support (30) est réalisée d'un seul tenant avec le générateur de gaz (16).

2. Module de coussin à gaz selon la revendication 1, **caractérisé en ce que** les crochets d'enclenchement (12) sont des bandes de tôles plates.

3. Module de coussin à gaz selon l'une des revendications précédentes, **caractérisé en ce que** les crochets d'enclenchement (12) sont pliés à angle droit depuis le tronçon de base (32).

4. Module de coussin à gaz selon l'une des revendications précédentes, **caractérisé en ce que** le tronçon de base (32) forme un cadre rigide.

5. Module de coussin à gaz selon l'une des revendications précédentes, **caractérisé en ce que** la tôle support (30) est une pièce estampée.

6. Module de coussin à gaz selon l'une des revendications précédentes, **caractérisé en ce que** la tôle support (30) forme un contact de klaxon (33).

7. Module de coussin à gaz selon l'une des revendications précédentes, **caractérisé en ce que** le module de coussin à gaz (10") est intégré dans un couvercle (50).

8. Module de coussin à gaz selon la revendication 7, **caractérisé en ce que** le couvercle (50) présente des parois latérales (54) faisant saillie depuis une face frontale (52), sur lesquelles sont prévues des volets (56) agencés de manière à pivoter et **en ce que** la tôle support (30) est reliée aux volets (56).
